(19) Europäisches Patentamt / European Patent Office / Office européen des brevets

(11) **EP 4 686 768 A1**

(12) **EUROPÄISCHE PATENTANMELDUNG**

(43) Veröffentlichungstag:
04.02.2026 Patentblatt 2026/06

(21) Anmeldenummer: 24192416.6

(22) Anmeldetag: 01.08.2024

(51) Internationale Patentklassifikation (IPC):
C22B 3/04 $^{(2006.01)}$        C22B 3/08 $^{(2006.01)}$
C22B 3/44 $^{(2006.01)}$        C22B 3/00 $^{(2006.01)}$
C22B 26/12 $^{(2006.01)}$       C22B 47/00 $^{(2006.01)}$
C25B 1/14 $^{(2006.01)}$        C25C 1/06 $^{(2006.01)}$

(52) Gemeinsame Patentklassifikation (CPC):
C22B 26/12; C22B 3/045; C22B 3/08; C22B 3/44;
C22B 23/043; C22B 47/00; C25B 1/14; C25B 1/16;
C25C 1/06

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **ESy-Labs-GmbH**
**93055 Regensburg (DE)**

(72) Erfinder:
• **MÜLLER, Julian**
**93051 Regensburg (DE)**
• **KILIC, Mehmet**
**93309 Kelheim (DE)**
• **GÄRTNER, Tobias**
**93093 Donaustauf (DE)**
• **WALDVOGEL, Siegfried R.**
**55435 Gau-Algesheim (DE)**

(74) Vertreter: **Meissner Bolte Partnerschaft mbB**
**Patentanwälte Rechtsanwälte**
**Postfach 86 06 24**
**81633 München (DE)**

(54) **VERFAHREN ZUR GEWINNUNG VON LITHIUMSALZEN AUS SCHWARZMASSE**

(57)      Die vorliegende Erfindung betrifft ein Verfahren zur Gewinnung von Lithiumsalzen aus Schwarzmasse aus dem mechanischen Recycling von Lithiumbatterien, insbesondere aus Lithiumionen-Sekundärbatterien, umfassend folgende Schritte:

i) Bereitstellung einer schwefelsauren, wässrigen Lösung von Lithiumperoxosdisulfat durch Elektrolyse einer wässrigen Lösung von Lithiumsulfat in einer geteilten Elektrolysezelle, wobei man im Anodenraum der geteilten Elektrolysezelle eine schwefelsaure wässrige Lösung des Lithiumperoxodisulfats und Sauerstoff und im Kathodenraum der geteilten Elektrolysezelle eine wässrige Lithiumhydroxid-Lösung und Wasserstoff erhält;

ii) Behandlung der Schwarzmasse mit der in Schritt i) bereitgestellten schwefelsauren wässrigen Lösung von Lithiumperoxodisulfat, wobei man eine erste wässrige Lösung erhält, welche das in der Schwarzmasse enthaltene Lithium in Form seiner Sulfate und/oder Phosphate sowie wenigstens eines Teils der in der Schwarzmasse enthaltenen mehrwertigen Metalle in Form ihrer Sulfate und/oder Phosphate enthält;

iii) Abreichern der mehrwertigen Metalle und des gegebenenfalls enthaltenen Phosphats aus der ersten wässrigen Lösung unter Erhalt einer zweiten, an mehrwertigen Metallen und gegebenenfalls Phosphat abgereicherten, zweiten wässrigen Lösung, die Lithium in Form eines gelösten Salzes und Sulfat enthält;

iv) Gewinnung des Lithiums in Form eines Salzes aus der zweiten wässrigen Lösung und/oder aus der im Kathodenraum erhaltenen wässrige Lithiumhydroxid-Lösung.

**Beschreibung**

Die Erfindung betrifft ein Verfahren zur Gewinnung von Lithiumsalzen aus Schwarzmasse, die durch Recycling von Lithiumbatterien gewonnen wurde.

Im Zuge der zunehmenden Elektrifizierung in vielen Bereichen, wie der Elektromobilität, bei der Speicherung von Solarstrom und der Elektronik, spielen Lithium-Batterien, insbesondere Li-Ionen-Akkumulatoren, im Folgenden auch als Li-Sekundärbatterien bezeichnet, eine zunehmend wichtige Rolle.

Um die Umweltverträglichkeit und Wirtschaftlichkeit dieser Technologie zu erhöhen, werden verschiedene Konzepte wie "Seoncd Life", Reparatur, Wiederaufbereitung und Überholung verfolgt, um die Nutzungsdauer von Li-Ionen-Akkumulatoren zu verlängern. Zur Verbesserung der Nachhaltigkeit, der Schonung der teilweise nur beschränkt zugänglichen Rohstoffen, hierbei handelt es sich vor allem neben Lithium um wertvolle Übergangsmetalle wie Cobalt, Nickel, Mangan und Kupfer, und der zunehmenden Abhängigkeit bezüglich dieser Rohstoffe von Drittländern ist es allerdings unabdingbar, die gebrauchten und nicht mehr funktionsfähiger Li-Ionen-Akkumulatoren einer Rückgewinnung dieser Rohstoffe zuzuführen. Zudem ist neben der Rücknahme der Li-Batterien durch die Hersteller auch das Recycling nicht mehr funktionsfähiger Lithium-Primär- und Sekundärbatterien in vielen Ländern gesetzlich vorgeschrieben.

Die Verfahren zur Aufarbeitung von Li-Ionen-Akkumulatoren lassen sich vereinfacht in die folgenden drei Bereich einteilen:

   1) Mechanische Verfahren
   2) Pyrometallurgische Verfahren
   3) Hydrometallurgische Verfahren

Übersichten zu diesen Verfahren und deren Kombinationen beim Recycling von Lithium-Primär und Sekundärbatterien findet man von V. Marcinov et al., Metals 2023, 13, 1213; sowie von H. H. Heimes et al. in Elektromobilität (Hrsg.: A. Kampker, H.H. Heimes), Springer, Berlin, Heidelberg, 2024, Kapitel 43, S. 687-704.

Die mechanischen Verfahren beruhen darauf, dass Lithiumzellen nach Demontage der Batterien geschreddert werden und die Bestandteile dann im Nachgang auf Grund von physikalischen Parametern wie z.B. Dichte getrennt werden. Hierbei wird als wichtigster Wertstoff die sogenannte Schwarzmasse erhalten, die im Wesentlichen die in den Lithiumzellen und den Leiterschichten enthaltenen Metalle in Form von Salzen und/oder Oxiden sowie das Kohlenstoff-Elektrodenmaterial enthält. Die mechanischen Verfahren dienen oftmals der Vorbehandlung bzw. Vorsortierung bevor eines der anderen beiden Verfahren zum Einsatz kommt, in denen die Schwarzmasse aufgeschlossen wird.

Pyrometallurgische Verfahren beruhen auf der thermischen Behandlung der bei der mechanischen Aufbereitung erhaltenen Schwarzmasse. Hierbei wird der in den Lithiumbatterien als Elektrodenmaterial üblicherweise enthaltene Kohlenstoff verbrannt und die metallischen Bestandteile zu einer Schlacke oder Asche vereinigt. Dieser Reststoff geht in klassische Herstellungsverfahren für z.B. Cu, Ni, Mn, Co aus den Primärerzen.

Hydrometallurgische Verfahren beruhen auf der Behandlung der Schwarzmasse mit Säuren oder oxidativen Aufschlussreagenzien wie $H_2O_2$. Hierbei wird die Schwarzmasse mit großen Mengen an Reagenz aufgeschlossen, um die Metalle in Lösung zu bringen. Im Anschluss werden unter Ausnutzung von pH-Wertverschiebungen, Fällungsreaktionen und Fest-Flüssigtrennungen Metallsalze abgetrennt, gewaschen und je nach Reinheit wieder in den Kreislauf zurückgegeben.

Als Nachteile bekannter hydrometallurgischer Verfahren lassen sich wie folgt zusammenfassen:

-   Umgang mit großen Mengen an Chemikalien wie Säuren, Laugen, Oxidations- und Fällungsmittel;
-   Bevorratung von Peroxiden mit den damit verbundenen Sicherheitsauflagen
-   Geringe Raum-Zeit-Ausbeuten und damit hoher apparativer Aufwand;
-   Große Mengen von Abwasser und Schlämmen.

Die Nachteile der pyrometallurgische Prozesse lassen sich wie folgt zusammenfassen:

-   Einsatz große Mengen an Brennstoffen und/oder elektrischer Energie;
-   Notwendigkeit aufwendiger Abgasreinigungsverfahren;
-   Lithium ist in der Schlacke gebunden und kann hieraus nur mit hohem Aufwand gewonnen werden.

Alle Technologien zum Aufschluss von Schwarzmasse aus dem mechanischen Recycling von Lithiumbatterien benutzen Chemikalien im stöchiometrischen Maßstab. Diese verursachen einen immensen Verbrauch an Ressourcen und Abfälle in der Produktion sowie später in der Entsorgung. Darüber hinaus ist der Energieeintrag mittels Pyrolyse hoch. Mit diesen Methoden alleine sind die zukünftig erforderlichen Recyclingquoten nicht zu erreichen.

Der Erfindung liegt somit die Aufgabe zugrunde, ein Verfahren zur Gewinnung von Lithiumsalzen aus Schwarzmasse aus dem mechanischen Recycling von Lithiumbatterien bereitzustellen, welches die Nachteile des Standes der Technik zumindest teilweise überwindet. Insbesondere soll das Verfahren keine stöchiometrischen oder überstöchiometrischen Mengen an Chemikalien, wie Säuren und Fällungsmitteln erfordern, um größere Abfallmengen zu vermeiden. Zudem sollte der zur Durchführung des Verfahrens erforderliche Energieeinsatz möglichst gering und im Wesentlichen auf den Einsatz von Strom beschränkt sein, so dass vornehmlich erneuerbare Energiequellen genutzt werden können.

Es wurde gefunden, dass diese und weitere Aufgaben durch das hier und im Folgenden beschriebene Verfahren gelöst werden kann, bei dem die Schwarzmasse aus dem mechanischen Recycling von Lithiumbatterien, insbesondere von Lithiumionen-Akkumulatoren, mit einer schwefelsauren wässrigen Lösung des Lithiumperoxosdisulfat behandelt, welche zuvor durch eine Elektrolyse einer wässrigen Lösung von Lithiumsulfat in einer geteilten Elektrolysezelle bereitgestellt wurde. Hierbei wird eine erste wässrige Lösung erhalten, welche das in der Schwarzmasse enthaltene Lithium in Form Sulfate und/oder Phosphate sowie wenigstens eines Teils der in der Schwarzmasse enthaltenen mehrwertigen Metalle in Form ihrer Sulfate und/oder Phosphate enthält. Aus dieser Lösung können dann die Übergangsmetalle, das Aluminium und das Lithium sowie gegebenenfalls vorhandenes Phosphat zurückgewonnen werden.

Ein zentraler Aspekt der Erfindung ist der Einsatz von Lithium in der elektrochemischen in situ-Herstellung von Peroxodisulfat zum Aufschluss der Schwarzmasse. Das hierbei im Katholyten anfallende Lithiumhydroxid bzw. das daraus gewonnene Lithiumcarbonat kann zur Fällung anderer Begleitmetalle genutzt werden. Lithium kann somit im Kreislauf geführt werden, so dass der externe Zusatz von Chemikalien vermieden und netto Lithium aus dem Prozess ausgeschleust werden kann. Darüber hinaus werden keine Verunreinigungen aus Alkalimetallen eingeschleppt, wodurch eine komplexe Reinigung im Anschluss nicht nötig ist.

Dementsprechend betrifft die vorliegende Erfindung ein Verfahren zur Gewinnung von Lithiumsalzen aus Schwarzmasse aus dem mechanischen Recycling von Lithiumbatterien, insbesondere aus Lithiumionen-Sekundärbatterien, umfassend folgenden Schritte:

i) Bereitstellung einer schwefelsauren, wässrigen Lösung von Lithiumperoxosdisulfat durch Elektrolyse einer wässrigen Lösung von Lithiumsulfat in einer geteilten Elektrolysezelle, wobei man im Anodenraum der geteilten Elektrolysezelle eine schwefelsaure wässrige Lösung des Lithiumperoxodisulfats und Sauerstoff und im Kathodenraum der geteilten Elektrolysezelle eine wässrige Lithiumhydroxid-Lösung und Wasserstoff erhält;

ii) Behandlung der Schwarzmasse mit der in Schritt i) bereitgestellten schwefelsauren wässrigen Lösung von Lithiumperoxodisulfat, wobei man eine erste wässrige Lösung erhält, welche das in der Schwarzmasse enthaltene Lithium in Form seiner Sulfate und/oder Phosphate sowie wenigstens eines Teils der in der Schwarzmasse enthaltenen mehrwertigen Metalle in Form ihrer Sulfate und/oder Phosphate enthält;

iii) Abreichern der mehrwertigen Metalle und des gegebenenfalls enthaltenen Phosphats aus der ersten wässrigen Lösung unter Erhalt einer zweiten, an mehrwertigen Metallen und gegebenenfalls Phosphat abgereicherten, zweiten wässrigen Lösung, die Lithium in Form eines gelösten Salzes und Sulfat enthält;

iv) Gewinnung des Lithiums in Form eines Salzes aus der zweiten wässrigen Lösung und/oder aus der im Kathodenraum erhaltenen wässrige Lithiumhydroxid-Lösung.

Das Verfahren ist mit einer Reihe von Vorteilen verbunden. Anders als bei den bekannten hydrometallurgischen Verfahren müssen dem Prozesse keine Reagenzien in stöchiometrischer oder überstöchiometrischer Menge zugeführt werden. Vielmehr kann das für den Prozess benötigte Lithiumsulfat direkt aus dem aus der Schwarzmasse gewonnenen Lithiumsalz durch Umsetzen mit Schwefelsäure bzw. Sulfat aus dem Peroxodisulfataufschluss hergestellt und in den Prozess zurückgeführt werden. Das bei der Elektrolyse im Katholyten anfallende Lithiumhydroxid kann zum einen leicht durch Fällung mit $CO_2$ als Lithiumcarbonat oder durch Abkühlen der Lösung als festes Lithiumhydroxid isoliert werden. Dieses zeichnet sich durch eine hohe Reinheit aus, da ausschließlich lithiumhaltige Startmaterialien eingesetzt werden müssen. Das erhaltene Lithiumcarbonat kann daher direkt zur Herstellung von Lithium-Batterien eingesetzt werden.

Außerdem kann der alkalische Katholyt teilweise zur Fällung der beim Behandeln der Schwarzmasse in Schritt ii) gelösten Übergangsmetallsalze und Aluminiumsalze genutzt werden. Auf diese Weise kann der Einsatz zusätzlicher Reagenzien im Wesentlichen auf das initial eingesetzt Lithiumsulfat bzw. Schwefelsäure, beschränkt und die Abfalllast im Vergleich zu den bekannten hydrometallurgischen Verfahren drastisch verringert werden. Zudem lassen sich die beim Behandeln der Schwarzmasse in Schritt ii) gelösten Übergangsmetallsalze in einfacher Weise abtrennen und zurückgewinnen. Die in Schritt iii) erhaltene, an Aluminium und Übergangsmetallen zweite wässrige Lösung kann zumindest teilweise in den Anodenraum zurückgeführt werden und dort zur Herstellung von Lithiumperoxodisulfat und damit zum Aufschluss der Schwarzmasse genutzt werden. Auf diese Weise kann der Reagenzienbedarf weiter abgesenkt werden. Im Vergleich zu anderen hydrometallurgischen Verfahren erlaubt das erfindungsgemäße Verfahren höhere Raumzeitausbeuten. Zudem fällt bei der Elektrolyse Wasserstoff an, der zur Rückverstromung genutzt werden kann und daher zur Energiebilanz des Verfahrens vorteilhaft beiträgt.

Schritt i)

Erfindungsgemäß umfasst das Verfahren in Schritt i) die Bereitstellung einer schwefelsauren wässrigen Lösung von Lithiumperoxosdisulfat durch Elektrolyse einer wässrigen Lösung von Lithiumsulfat. Die hierbei stattfindenden Teil- und Bruttoreaktionen lassen sich durch die folgen Reaktionsgleichungen (1a)-(1c) beschreiben:

$$\text{Anodenreaktion: } Li_2SO_4 \rightarrow 1/2\ Li_2S_2O_8 + Li^+ + e^- \qquad (1a)$$

$$\text{Kathodenreaktion: } H_2O + e^- \rightarrow OH^- + 1/2\ H_2 \qquad (1b)$$

$$\text{Bruttoreaktion: } Li_2SO_4 + H_2O \rightarrow 1/2\ Li_2S_2O_8 + LiOH + 1/2\ H_2 \qquad (1c)$$

Die Elektrolyse wird in einer geteilten Elektrolysezelle durchgeführt, d. h. die Anoden- und Kathodenräume sind räumlich durch einen Separator getrennt, z.B. durch eine Membran oder ein Diaphragma, insbesondere durch eine Kationen-selektive Membran, z.B. eine Kationen-selektive Keramikmembran oder eine Kationentauschermembran. Besonders bevorzugt sind hierunter Kationentauschermembranen, z.B. Kationentauschermembranen der Fa. Nafion.
Im Anodenraum bildet sich durch die elektrochemische Oxidation des Lithiumsulfats das Lithiumperoxodisulfat. Als Nebenreaktion entsteht Sauerstoff. Im Kathodenraum bilden sich Wasserstoff und Hydroxid-Ionen, wobei die Elektroneutralität im Kathodenraum durch Ionentransport der Lithiumionen durch den Separator aus dem Anodenraum in den Kathodenraum gewährleistet ist. Dieser Transport erlaubt die Separation des Lithiums von anderen in der Lösung gegebenenfalls enthaltenen Metallsalzen.
Grundsätzlich sind als Anodenmaterialien alle Materialien geeignet, die eine hohe Säurestabilität aufweisen. Beispiele hierfür sind Platin, dimensionsstabile Anoden (z. B. Ir- und/oder Ruoxid auf Titan oder Tantal), Bleidioxid, Zinnoxid, Graphit, Glaskohlenstoff, Kohlenstoffkomposite sowie Bor-dotierter Diamant. Bevorzugt umfasst das Anodenmaterial der Anode der geteilten Elektrolysezelle Bor-dotierten Diamant. Derartige Elektroden weisen typischerweise eine Beschichtung von Bor-dotiertem Diamant auf. Im Falle flächiger Träger sind die Träger vorzugsweise beidseitig beschichtet. Geeignete Trägermaterialien sind beispielsweise Niob, Titan, Molybdän, Tantal, Silizium, Siliziumcarbid, Glaskohlenstoff oder Stahl. Die Anode kann einseitig oder beidseitig vom Anolyten, d. h. der sich im Anodenraum befindlichen Flüssigkeit umspült sein.
Als Anolyt wird eine wässrige Lösung von Lithiumsulfat eingesetzt. Diese weist in der Regel einen pH-Wert im Bereich von pH 0 bis pH 9, insbesondere im Bereich von pH 0 bis pH 7, speziell im Bereich von pH 0 bis pH 5 auf, gemessen bei 25°C und 1 bar mit einer pH-Elektrode. Ein pH Wert von pH 9 stellt sich in der Regel beim Auflösen von Lithiumsulfat in entionisiertem Wasser ein. Niedrigere pH-Werte des Anolyten werden beispielsweise durch Zugabe von Schwefelsäure eingestellt.
Die Konzentration des Lithiumsulfats im Anolyten liegt überlicherweise im Bereich von 0,5 mol/L bis hin zur Sättigungskonzentration von Lithiumsulfat in Wasser. Vorzugsweise liegt die Konzentration des Lithiumsulfats im Anolyten im Bereich von 1 bis 3 Mol/L.
Zur Förderung der Oxidationsreaktion ist es weiterhin von Vorteil, wenn im Anolyten ein pH-Wert von pH 0,5 nicht unterschritten wird. Zur Stabilisierung des pH Wertes ist es daher von Vorteil, wenn die Konzentration der Lithiumionen zu Beginn der Elektrolyse im Anolyten im Bereich von 0,1 bis 10 mol/L liegtVorzugsweise wird bei der Elektrolyse die Lithiumionenkonzentration im Anolyten so gewählt, dass sie im Bereich von 1 bis 8 mol/L und insbesondere im Bereich von 2 bis 6 mol/L liegt.
Gegebenenfalls kann es von Vorteil sein, bereits vor Beginn der Elektrolyse dem Anolyten Schwefelsäure zuzusetzen, so dass der pH-Wert zu Beginn der Elektrolyse maximal pH 7 beträgt. Vorzugsweise wird man den pH-Wert des Anolyten vor Beginn der Elektrolyse nicht unter pH 1 absenken.
Nicht zuletzt aufgrund der als Nebenreaktion ablaufenden Elektrolyse des Wassers unter Bildung von Sauerstoff und Protonen sinkt im Verlauf der Elektrolyse der pH-Wert des Anolyten auf Werte unterhalb pH 5, z.B. auf Werte im Bereich von pH 0 bis < pH 5. Ein Absinken des pH-Wertes kann teilweise auch darauf zurückgeführt werden, dass der Transport der Lithiumionen aus dem Anodenraum in den Kathodenraum rascher abläuft als die Bildung von Lithiumperoxodisulfat im Anodenraum. Zudem wird durch den Transport der Lithiumionen vom Anolyten durch den Separator in den Katholyten Hydratwasser aus dem Anolyten in den Katholyten transportiert, was zu einer Volumenverringerungen des Anolyten bzw. zu einer Konzentrationserhöhung der $H^+$-Ionen im Anolyten führt und damit ebenfalls zu einem Absinken des pH-Werts.
Vorzugsweise wird man im Laufe der Elektrolyse zum Ausgleich der Lithiumionenkonzentration Lithiumsulfat dem Anodenraum zuführen. Insbesondere wird man so vorgehen, dass man aus dem Anodenraum Anolyt, der mit Lithiumperoxodisulfat angereichert ist, ausschleust und dem im Anodenraum verbleibenden Anolyten Lithiumsulfat zuführt. Dies kann diskontinuierlich oder kontinuierlich erfolgen. Beispielsweise kann man so vorgehen, dass man frisches Lithiumsulfat dem Anolyten zuführt, vorzugsweise in Form einer wässrigen Lösung des Lithiumsulfats, die vorzugsweise einen pH-Wert im Bereich von pH 0 bis pH 7, speziell im Bereich von pH 0 bis pH 5 aufweist, gemessen bei 25°C und 1 bar mit einer pH-Elektrode. Vorzugsweise wird man die in Schritt iii) erhaltene zweite Lösung, die Lithium in Form eines gelösten Salzes und Sulfat enthält, dem Anolyten zuführen, gegebenenfalls in Kombination mit frischem Lithiumsulfat wie zuvor beschrieben. Hierdurch wird die Effizienz der Lithiumperoxodisulfat-Herstelllung, bezogen auf eingesetztes Lithiumperoxodisulfat, gesteigert und etwaige Verluste an Sulfat und Lithium können minimiert werden.

In einer bevorzugten Ausführungsform der Erfindung wird der Inhalt des Anodenraums der geteilten Elektrolysezelle durchmischt. Für diese Durchmischung des Zelleninhalts können jegliche dem Fachmann bekannte mechanische Rührer eingesetzt werden. Eine Durchmischung kann auch durch Umpumpen des Anolyten erreicht werden. Beispielsweise kann man so vorgehen, dass man aus einem Reservoir eine wässrige Lösung des Lithiumsulfats durch den Anodenraum durchpumpt und so den Anolyten im Kreis führt.

Im Kathodenraum bildet sich Wasserstoff durch Reduktion des Wassers. Dabei entstehen naturgemäß Hydroxidionen. Während der Elektrolyse wandern Lithiumionen aus dem Anodenraum durch den Separator in den Kathodenraum, so dass sich als Bruttoreaktion Lithiumhydroxid bildet, welches sich im Katholyten, d.h. der im Kathodenraum befindlichen wässrigen Flüssigkeit, anreichert.

In der Regel setzt man als Katholyten eine wässrige Lösung ein, die bereits Lithiumhydroxid enthält. Die Konzentration des Lithiumhydroxids im Katholyten liegt zu Beginn der Elektrolyse üblicherweise im Bereich von 0,01 bis 4 mol/L, insbesondere im Bereich von 0,2 bis 0,7 mol/L. Da während der Elektrolyse die Konzentration an Lithiumhydroxid im Katholyten ansteigt, kann dieser in einfacher Weise zur Gewinnung von Lithiumsalzen in Schritt iv) eingesetzt werden. Vorzugsweise wird man während der Elektrolyse im Katholyten eine Lithiumionenkonzentration bzw. eine Lithiumhydroxidkonzentration im Bereich von 0,2 bis 0,7 mol/L aufrecht erhalten, um einen niedrigen Zellwiderstand zu gewährleisten. Vorzugsweise wird man hierzu einen Teil des Katholyten aus dem Kathodenraum ausschleusen und durch Wasser ersetzen. Alternativ hierzu oder in Kombination hiermit kann man so vorgehen, dass man aus dem ausgeschleusten Katholyten einen Teil oder die Gesamtmenge des darin enthaltenen Lithiums abreichert und den so an Lithium abgereicherten Katholyten in den Kathodenraum zurückführt. Auf diese Weise wird der ausgeschleuste Katholyt zumindest teilweise durch den an Lithium abgereicherten Katholyten ersetzt. Dies kann diskontinuierlich oder kontinuierlich erfolgen.

In einer bevorzugten Ausführungsform der Erfindung wird der Inhalt des Kathodenraums der geteilten Elektrolysezelle durchmischt. Für diese Durchmischung des Zelleninhalts können jegliche dem Fachmann bekannte mechanische Rührer eingesetzt werden. Eine Durchmischung kann auch durch Umpumpen des Katholyten erreicht werden. Beispielsweise kann man so vorgehen, dass man aus einem Reservoir eine wässrige Lösung des Lithiumhydroxids durch den Kathodenraum durchpumpt und so den Katholyten im Kreis führt.

Grundsätzlich sind als Kathodenmaterialien alle Materialien geeignet, die eine hohe Alkalistabilität aufweisen. Beispiele hierfür sind Edelstahl, Titan, Graphit, Bor dotierter Diamant, Blei, Messing, Kupfer, Nickel, Platin und platinierte Elektroden. Bevorzugt handelt es sich bei dem Kathodenmaterial der geteilten Elektrolysezelle um Edelstahl, der beispielsweise in Form von Blechen, Netzen oder Gittern, die einseitig oder beidseitig vom Katholyten umspült sein können.

Im Übrigen kann die Elektrolyse in Schritt i) in Analogie zu der in WO 97/07262 beschriebenen Herstellung von Natriumperoxodisulfat und Natronlauge durch Elektrolyse von wässrigem Natriumsulfat hergestellt werden.

Durch Anlegen der Elektrolysespannung an den Anoden und den Kathoden wird durch den Elektrolyten elektrischer Strom geführt. Die Elektrolysespannung in Schritt i) liegt in der Regel im Bereich von 3 bis 10 V, insbesondere 4 bis 8 V. Um Nebenreaktionen und Beschädigungen des Elektrodenmaterials zu vermeiden, wird man in der Regel eine Stromdichte von 1000 mA/cm$^2$, insbesondere 800 mA/cm$^2$, nicht überschreiten. Die Stromdichten, bei denen man das Verfahren durchführt, betragen im Allgemeinen 50 bis 1000 mA/cm$^2$, bevorzugt 100 bis 800 mA/cm$^2$.

Die Gesamtdauer der Elektrolyse in Schritt i) hängt naturgemäß von der Elektrolysezelle, den im System enthaltenen Stoffmengen, den verwendeten Elektrodenflächen und der Stromdichte ab. Eine optimale Dauer kann der Fachmann durch Routineversuche, z.B. durch Probennahme während der Elektrolyse ermitteln. In der Regel wird die Elektrolyse so geführt, dass im Anolyten eine Konzentration an Peroxodisulfat im Bereich von 0,1 bis 2 mol/L resultiert.

Typischerweise liegt die zur Erzielung eines quantitativen Umsatzes benötigte Strommenge im Bereich von 1 bis 12 F (96500 - 1158000 Coulomb/Mol) bezogen auf die Menge der übertragenen Elektronen auf Lithiumsulfat.

Zur Erzielung optimaler Raum-Zeit-Ausbeuten sind dem Fachmann verschiedene Elektrodengeometrien bekannt. Wesentlich ist lediglich, dass die Anode von der Kathode durch einen Separator getrennt vorliegen, so dass der Anolyt und der Katholyt räumlich getrennt sind. Geeignet sind beispielsweise Anordnungen von Elektrodenblechen, bipolare Anordnung mehrerer Elektroden, eine Anordnung, in der eine stabförmige Anode von einer zylindrischen Kathode umfasst wird, oder eine Anordnung, in der sowohl die Kathode als auch die Anode aus einem Drahtnetz bestehen und diese Drahtnetze aufeinandergelegt und zylindrisch aufgerollt wurden. Der Abstand der jeweiligen Elektrode zur Membran liegt typischerweise im Bereich von 0 bis 30 mm.

Die Elektrolyse in Schritt i) wird in der Regel bei einer Temperatur in einem Bereich von 10 bis 100 °C, bevorzugt 20 bis 80 °C, insbesondere 30 bis 70 °C durchgeführt.

In Schritt i) wird die Elektrolyse in der Regel bei einem Druck unterhalb 2000 kPa, bevorzugt unterhalb 1000 kPa, insbesondere unterhalb 150 kPa, z.B. im Bereich von 50 bis 1000 kPa, insbesondere 80 bis 150 kPa, durchgeführt. Besonders bevorzugt ist es das erfindungsgemäße Verfahren bei einem Druck im Bereich des Atmosphärendrucks (101 ± 20 kPa) durchzuführen.

Schritt i) kann mit gutem Erfolg sowohl diskontinuierlich als auch kontinuierlich durchgeführt werden. Das erfindungsgemäße Verfahren kann ebenfalls im industriellen Maßstab durchgeführt werden. Entsprechende Elektrolysezellen sind dem Fachmann bekannt. Alle Ausführungen dieser Erfindung beziehen sich sowohl auf den Labor- wie auf den industriellen Maßstab.

Schritt ii)

In Schritt ii) wird die in Schritt i) erhaltene schwefelsaure, wässrige Lösung des Lithiumperoxodisulfats zum Aufschluss der Schwarzmasse eingesetzt. Hierbei gehen das in der Schwarzmasse enthaltene Lithium, das in der Regel in der Schwarzmasse enthaltene Aluminium sowie zumindest ein Teil der in der Schwarzmasse enthaltenen Übergangsmetalle in Lösung. Diese Lösung wird im Folgenden auch als erste wässrige Lösung bezeichnet. Hierin liegen das in der Schwarzmasse enthaltene Lithium, das in der Regel in der Schwarzmasse enthaltene Aluminium sowie zumindest ein Teil der in der Schwarzmasse enthaltenen Übergangsmetalle in Form ihrer Salze, nämlich insbesondere in Form der Sulfate vor, wobei das Lithium, das Aluminium und die Übergangsmetalle auch in Form der Phosphate vorliegen können, wenn die Schwarzmasse Phosphat enthält, z.B. Eisen(III)-phosphat, Lithiumeisen(II)-phosphat oder Phosphat aus der Hydrolyse von Hexafluorophosphat aus Leitsalzen wie Lithiumhexafluorophosphat.

Der Aufschluss erfolgt typischerweise durch Behandlung der Schwarzmasse mit der in Schritt i) bereitgestellten schwefelsauren wässrigen Lösung von Lithiumperoxodisulfat. Vorzugsweise wird der pH-Wert der hierfür eingesetzten schwefelsauren wässrigen Lösung des Lithiumperoxodisulfats so gewählt, dass diese einen pH-Wert, gemessen bei 25°C und 1 bar mit einer pH-Elektrode, unterhalb pH 2, insbesondere maximal pH 1,5 und speziell maximal 1 aufweist. Sollte die bei der Elektrolyse im Anodenraum anfallende wässrige Lösung des Lithiumperoxodisulfats einen höheren pH-Wert aufweisen, wird man vorzugsweise durch Zugabe von Schwefelsäure diesen pH-Wert entsprechend einstellen.

Erfindungsgemäß wird eine Schwarzmasse behandelt, die aus der mechanischen Aufarbeitung einer Lithiumbatterie stammt. Hierbei kann es sich um eine Lithium-Primärbatterie oder um eine Lithium-Sekundärbatterie handeln. Bezüglich der Gewinnung der Schwarzmasse wird auf die eingangs zitierte Literatur verwiesen. Insbesondere hat sich das Verfahren zur Behandlung von Schwarzmasse aus der mechanischen Aufarbeitung von Lithium-Sekundärbatterien, i. E. Lithiumionen-Akkumulatoren, bewährt. Hierbei kann es sich um Lithium-Sekundärbatterien aus der Elektromobilität, um Lithium-Sekundärbatterien, die zur Speicherung von Solarstrom und aus Wind erzeugtem Strom eingesetzt werden, um Lithium-Sekundärbatterien aus der Computer- und/oder Telekommunikationstechnik, Lithium-Sekundärbatterien aus elektrischen Werkzeugen wie Akkuschrauber, Akkusägen oder , elektrischen Haushaltsgeräten wie Akku-Staubsaugern oder Gartengeräten wie Akkurasenmähern (sog. Powertools) und sonstigen elektrisch betriebenen Geräten, wie beispielsweise E-Zigaretten.

Typischerweise enthalten diese Schwarzmassen neben Lithium auch mehrwertige Metalle, wie Aluminium, ggf. Blei, sowie ein oder mehrere Übergangsmetalle wie Kupfer, Eisen, Nickel, Cobalt, Mangan und/oder Vanadium. Außerdem enthalten Schwarzmassen typischerweise Phosphor in Form von Phosphat und/oder in Form von Phosphor-Fluor-Verbindungen, die zu Phosphat hydrolysieren. Typischerweise enthält die Schwarzmasse die vorgenannten Bestandteile in folgenden Mengen, wobei die Mengen je nach Herkunft und Qualität der Schwarzmasse stark variieren können:

| | |
|---|---|
| Lithium: | 0,2 bis 10,0 Gew.-% |
| Aluminium: | 0,2 bis 25,0 Gew.-% |
| Eisen: | 0 bis 20,0 Gew.-% |
| Kupfer: | 0,1 bis 25,0 Gew.-% |
| Cobalt: | 0 bis 30,0 Gew.-% |
| Nickel: | 0 bis 20,0 Gew.-% |
| Mangan: | 0 bis 30,0 Gew.-% |
| Vanadium: | 0 bis 1,0 Gew.-% |
| Fluor: | 0 bis 10,0 Gew.-% |
| Phosphor: | 0 bis 20,0 Gew.-% |
| Kohlenstoff: | 1 bis 50 Gew.-% |

Die Behandlung der Schwarzmasse in Schritt ii) kann bei Raumtemperatur erfolgen oder bei erhöhter Temperatur, z.B. bei einer Temperatur von wenigstens 30 °C, insbesondere bei einer Temperatur von wenigstens 40 °C, z.B. bei einer Temperatur im Bereich von 30 bis 100°C, insbesondere im Bereich von 40 bis 95 °C. Grundsätzlich sind auch höhere Temperaturen von beispielsweise von bis zu 130 °C oder bis zu 110 °C denkbar. In diesen Fällen wird man den Aufschluss unter Druck durchführen.

Die Dauer der Behandlung kann variiert werden. In der Regel wird man die Behandlung so lange durchführen, dass sich das in der Schwarzmasse enthaltene Lithium zu wenigstens 90 mol-% löst und dass wenigstens 20 mol-%, insbesondere wenigstens 50 mol-%, speziell wenigstens 70 mol-% oder wenigstens 80 mol-% der in der Schwarzmasse enthaltenen mehrwertigen Metalle, insbesondere Aluminium und Übergangsmetalle, lösen. Hierzu belässt man die Schwarzmasse in der Regel wenigstens 4 h bis mehrere Tage, z.B. 4 h bis 96 h, insbesondere 8 h bis 72 h in Kontakt mit der in Schritt i) erhaltenen wässrigen, schwefelsauren Lösung des Lithiumperoxodisulfats. Die Menge der in Schritt i) erhaltenen wässrigen, schwefelsauren Lösung des Lithiumperoxodisulfats wird dabei so gewählt, dass zumindest die zur Auflösung des Lithiums und der mehrwertigen Metalle wie Aluminium, ggf. Blei und Übergangsmetalle theoretisch erforderliche Menge an Lithiumperoxodisulfat in Schritt ii) eingesetzt wird. Die hierfür erforderliche Menge kann der Fachmann in einfacher Weise aus dem analytischen bestimmten Gehalt an Lithium und mehrwertigen metallen, wie Aluminium, ggf. Blei und Übergangsmetalle, in der Schwarzmasse und der Konzentration an Lithiumperoxodisulfat in der in Schritt i) erhaltenen wässrigen schwefelsauren Lithiumperoxodisulfat-Lösung gemäß folgender Reaktionsgleichung (2) abschätzen

$$x\,Li_2S_2O_8 + a\,Cu + b\,Al + c\,LiFePO_4 + d\,LiNi_yMn_zCo_{1-y-z}O_2 \rightarrow 2x\,SO_4^{2-} + a\,Cu^{2+} + b\,Al^{3+} + (c+d+2x)\,Li^+ +$$
$$c\,FePO_4 + d\,Ni_yMn_zCo_{1-y-z}O_2 \qquad (2)$$

Hierbei steht x für die molare Menge an eingesetztem Lithiumperoxodisulfat und die Parameter a, b, c und d bedeuten die in der Schwarmasse enthaltenen Mol-Mengen an Kupfer, Aluminium, Lithiumeisen(II)-phosphat und $LiNi_yMn_zCo_{1-y-z}O_2$. Die theoretische Mindestmenge an Lithiumperoxodisulfat entspricht dann folgender Gleichung (3)

$$x = a + 2/3b + 0{,}5c + 0{,}5d \qquad (3)$$

Zur Förderung des Aufschlusses hat es sich als vorteilhaft erwiesen, wenn die Schwarzmasse und die in Schritt i) erhaltene wässrige, schwefelsaure Lösung des Lithiumperoxodisulfats durchmischt werden, z.B. durch Rühren, Schütteln oder Kombinationen dieser Maßnahmen.

Typischerweise enthält die Schwarzmasse neben Lithium, Aluminium und den Übergangsmetallen auch Materialien, die sich in der wässrigen, schwefelsauren Lithiumperoxodisulfat-Lösung nicht lösen. Diese verbleiben daher bei der Behandlung als Feststoff zurück. Hierzu zählen vor allem Kohlenstoff, gegebenenfalls zusammen mit unlöslichen Salzen und/oder organischen Materialien. In der Regel wird man daher vor der weiteren Verarbeitung der in Schritt ii) erhaltenen ersten wässrigen Lösung vor Schritt iii) eine Abtrennung der ersten wässrigen Lösung von Ungelöstem vornehmen. Diese Abtrennung kann in an sich bekannter Weise durch eine Fest-Flüssig-Trennung, wie beispielsweise eine Filtration, durch Dekantieren, Zentrifugieren oder durch Kombination dieser Maßnahmen vorgenommen werden. Der erhaltene Feststoff stellt seinerseits einen Rohstoff für die Batterieherstellung dar, z.B. für Lithiumbatterien, und kann daher entsprechend genutzt werden.

Schritt iii)

In Schritt iii) werden aus der in Schritt ii) erhaltenen Lösung die mehrwertigen Metalle, insbesondere die Übergangsmetalle und das Aluminium, sowie das gegebenenfalls enthaltene Phosphat teilweise oder vollständig abgereichert. Auf diese Weise gewinnt man einerseits die Übergangsmetalle als Wertstoff zurück und andererseits eine an mehrwertigen Metallen und gegebenenfalls Phosphat abgereicherte, zweite wässrige Lösung, die Lithium in Form eines gelösten Salzes und Sulfat enthält. Wie bereits erwähnt kann aus der zweiten Lösung das Lithium zurückgewonnen werden. Außerdem kann die zweite wässrige Lösung als Lithiumsulfat-Quelle in den Anolyten eingespeist werden und dort in Schritt i) elektrochemisch zu Lithiumperoxodisulfat oxidiert werden.

Die Abreicherung der mehrwertigen Metalle, insbesondere der Übergangsmetalle, des Aluminiums, des gegebenenfalls enthaltenen Eisens, des gegebenenfalls enthaltenen Bleis und des gegebenenfalls enthaltenden Phosphats kann in an sich bekannter Weise durch Fällung erfolgen. Die Übergangsmetalle können auch durch Gewinnungselektrolyse abgereichert und ggf. durch Raffination voneinander getrennt werden. Selbstverständlich ist es auch möglich, einen Teil oder alle Übergangsmetalle zumindest teilweise durch selektive Fällung abzutrennen. Beispielsweise kann man das Eisenphosphat, Eisenhydroxid, Aluminiumphosphat, Bleisulfat, Bleiphosphat und/oder Aluminiumhydroxid durch Fällung aus der ersten Lösung abreichern, während zumindest Teile der anderen Übergangsmetalle teilweise oder vollständig durch Gewinnungselektrolyse abgereichert werden. Verbleibende Übergangsmetalle, die nicht durch Gewinnungselektrolyse abgereichert werden, können ebenfalls durch Fällung, beispielsweise als Hydroxide, Sulfate oder Phosphate gefällt und auf diese Weise abgereichert werden.

Insbesondere umfasst Schritt iii) eine elektrochemische Abscheidung wenigstens eines Teils der in der ersten wässrigen Lösung enthaltenen Übergangsmetalle, insbesondere solcher Übergangsmetalle, deren Standardpotential in einer verdünnten wässrigen Lösung bei pH 2 gegen die Normalwasserstoffelektrode bei 25 °C und 1 bar wenigstens -0,5 V beträgt. Diese Abreicherung erfolgt typischerweise als eine Gewinnungselektrolyse, d. h. in Form einer Elektrolyse, bei der das bzw. die Übergangsmetalle durch Elektrolyse an der Kathode reduziert und auf dieser als Metall abgeschieden werden.

Die elektrochemische Abreicherung wenigstens eines Teils der in der ersten wässrigen Lösung enthaltenen Übergangsmetalle kann in an sich bekannter Weise erfolgen, wie beispielsweise beschrieben in Modern Electroplating, Schlesinger, Mordechay, Paunovic, Milan (Herausgeber), Electrochemical Society Series, 5. Auflage 2010 New York, Wiley & Sons Ltd. Sie wird typischerweise bei pH-Werten von unterhalb pH 5, insbesondere maximal pH 2 durchgeführt. Hierzu wird die in Schritt ii) erhaltene wässrige Lösung elektrolysiert. In der Regel erfolgt die Elektrolyse bei Temperaturen im Bereich von 10 bis 50 °C. Die Elektrolyse erfolgt in der Regel in ungeteilten Elektrolysezellen.

Vorzugsweise erfolgt die elektrochemische Abreicherung wenigstens eines Teils der in der ersten wässrigen Lösung enthaltenen Übergangsmetalle vor einer Fällung der verbleibenden Metallsalze, da erstere in der Regel bei niedrigen pH-Werten von in der Regel < pH 5, insbsondere maximal pH 2, letztere hingegeben bei pH-Werten von wenigstens pH 5, insbesondere bei mindestens pH 7 erfolgt.

In einer bevorzugten Ausgestaltung des Schrittes iii) wird Kupfer elektrochemisch aus der ersten Lösung abgereichert. Vorzugsweise erfolgt die elektrochemische Abscheidung als Gewinnungselektrolyse, bei der sich das Kupfer auf der Kathode als metallisches Kupfer abscheidet. Die Elektrolyse kupferhaltiger Lösungen zur Gewinnung des Kupfers ist seit langem bekannt und kann in analoger Weise zur Abreicherung des Kupfers und somit auch zu dessen Rückgewinnung durchgeführt werden. Vorzugsweise erfolgt die Elektrolyse bei pH-Werten von maximal pH 2, insbesondere bei pH-Werten im Bereich von pH 0 bis pH 2. Die Elektrolyse kann beispielsweise bei Temperaturen im Bereich von 10 bis 50 °C durchgeführt werden. Die Elektrolyse erfolgt in der Regel in ungeteilten Elektrolysezellen. Vorzugsweise erfolgt die Elektrolyse potentiostatisch. Vorzugsweise werden Spannungen im Bereich von 2 bis 4 V angewendet. Die Stromdichte liegt vorzugsweise im Bereich von 1 bis 20 mA/cm$^2$. Vorzugsweise wird man auf diese Weise wenigstens 90%, insbesondere wenigstens 95% des in der ersten wässrigen Lösung enthaltenen Kupfers abreichern.

Alternativ zur Elektrolyse oder im Anschluss an die Elektrolyse können die Übergangsmetalle auch durch Fällung aus der ersten wässrigen Lösung abgereichert werden. Auf diese Weise lassen sich auch in der ersten wässrigen Lösung gegebenenfalls enthaltenen mehrwertigen Metalle, z. B. Aluminium, Übergangsmetalle und gegebenenfalls Blei, und gegebenenfalls enthaltenes Phosphat abreichern. Hierzu wird man den pH-Wert durch Zugabe von Base anheben, in der Regel auf einen pH-Wert von mindestens pH 5, insbesondere mindestens pH 6, z.B. pH 5 bis pH 12 oder pH 6 bis pH 11. Hierdurch werden die mehrwertigen Metalle, d. h. die Übergangsmetalle und das Aluminium sowie gegebenenfalls Blei in Form ihrer Hydroxide und gegebenenfalls in Form ihrer Phosphate und/oder Sulfate gefällt. Die Abtrennung kann durch Steuerung des pH-Wertes selektiv erfolgen.

Idealerweise setzt man als Base Lithiumhydroxid und/oder Lithiumcarbonat ein, um den Eintrag von Fremddionen zu vermeiden. Vorzugsweise kann man den pH-Wert durch Zugabe von aus der Elektrolyse ausgeschleustem Katholyt auf den gewünschten Wert anheben.

Gegebenenfalls hebt man den pH-Wert stufenweise an, um eine selektive Fällung der verschiedenen Metalle zu bewirken. Beispielsweise reicht ein Anheben des pH-Wertes auf den Bereich von pH 5 bis pH 8 in der Regel aus, um das in der ersten Lösung gelöste Aluminium, Kupfer, Mangan und Eisen quantitativ zu fällen. Eine weitere Anhebung des pH-Wertes auf pH 10 oder höher führt dann zur quantitativen Fällung von Cobalt und Nickel.

Typischerweise führt man die Fällung bei Temperaturen im Bereich von 0 bis 50 °C durch.

Die so ausgefallenen Niederschläge können durch an sich bekannte Maßnahmen der Fest-Flüssig Trennung von der wässrigen Phase abgetrennt werden, beispielsweise durch Filtration und/oder durch Zentrifugation.

Durch die vorgenannten Maßnahmen erhält man eine zweite wässrige Lösung. Diese enthält vorzugsweise die jeweiligen Übergangsmetalle in weniger als 1 % bezogen auf den Ausgangswert und insbesondere in Konzentrationen von jeweils weniger als 0,05 Gew.-%, gerechnet als Metall. Die Gesamtkonzentration an Übergangsmetallen und Aluminium in der so erhaltenen Lösung liegt typischerweise unterhalb von 0,1 Gew.-%, bezogen auf die wässrige Lösung.

Schritt iv)

Sowohl die in Schritt iii) erhaltene zweite wässrige Lösung als auch der Katholyt enthalten Lithium und sind daher grundsätzlich als Quellen zur Rückgewinnung des Lithiums geeignet. Da beide Lösungen in der Regel pH-Werte oberhalb pH 7 aufweisen, gelingt die Gewinnung in einfacher Weise in Form des Lithiumcarbonats oder in Form des Lithiumhydroxids, z.B. in Form des Lithiumhydroxid-Hydrats, da diese in Wasser, zumindest bei niedrigen Temperaturen, eine vergleichsweise geringe Löslichkeit aufweisen.

Beispielsweise können die Lithiumsalze in der in Schritt iii) erhaltenen wässrigen Lösung in einfacher Weise durch Umsetzung mit COz in das in Wasser schlecht lösliche Lithiumcarbonat überführen. Dieses wird dann in an sich bekannter Weise als Feststoff aus der in Schritt iii) erhaltenen zweiten wässrigen Lösung abgetrennt. Auf diese Weise erhält man eine neutrale oder schwach saure wässrige Lösung, die im wesentlichen nur Lithiumsulfat enthält und in den Anodenraum eingespeist werden kann, und so wieder zur Gewinnung von Lithiumperoxodisulfat zur Verfügung steht.

In vergleichbarer Weise, kann man den Katholyten, der im wesentlichen nur Lithiumhydroxid und Wasser enthält, als Quelle für die Lithiumrückgewinnung nutzen. Da dieser nicht nur das eingesetzte Lithiumhydroxid enthält, sondern auch das sich bei der Elektrolyse im Katholyten angereicherte Lithiumhydroxid, wird auf diese Weise das in der Schwarzmasse enthaltene Lithium indirekt ebenfalls zurückgewonnen.

Das im Katholyten enthaltene Lithiumhydroxid lässt sich in der zuvor beschriebenen Weise in einfacher Weise durch Umsetzung mit $CO_2$ in das in Wasser schlecht lösliche Lithiumcarbonat überführen und aus dem Katholyten abtrennen. Alternativ kann man den Katholyten aufkonzentrieren und das darin enthaltene Lithium durch Kühlen als Lithiumhydroxid-Hydrat auskristallisieren. Dieses kann durch Trocknung in das wasserfreie Lithiumhydroxid überführt werden.

Die Umsetzung des Lithiumhydroxids mit $CO_2$ gelingt in einfacher Weise durch Versprühen der jeweiligen wässrigen in eine enthaltene Atmosphäre oder durch Einleiten von gasförmigem in die jeweilige wässrige Lösung.

Die folgenden Beispiele dienen der Veranschaulichung der Erfindung.

Beispiele

Schritt 1: Elektrolytische Herstellung einer wässrigen Lithiumperoxodisulfat-Lösung:

Die elektrolytische Herstellung wurde in einer geteilten Elektrolysezelle durchgeführt, die als Anode eine beidseitig mit 12 μm Bor-dotiertem Diamant beschichtete Niob-Elektrode (BDD-Elektrode) enthielt. Die BDD-Elektrode hatte eine aktive Elektrodenfläche von 750 $cm^2$, war zentral platziert und wurde beidseitig vom Anolyten umspült. Als Kathode dienten zwei, jeweils einseitig umspülte Edelstahlelektroden. Als Separator, der die beiden Elektrodenräume trennte, wurde eine Nafion™-Membran eingesetzt. Als Katholyt dienten 5 L einer wässrigen 0,25 molaren LiOH-Lösung. Als Anolyt wurden 4 L einer wässrigen $Li_2SO_4$ Lösung in Konzentrationen zwischen 1,8 und 3 mol/L verwendet. Die beiden Lösungen wurden aus zwei separaten Elektrolytreservoirs jeweils mit einer Flußrate im Bereich von 10 bis 15 L/min durch die Elektrolysezelle gepumpt (semi-Batch-Betrieb). Der Elektrolysestrom wurde entweder bei 75, 100 oder 150 A konstant gehalten, was einer Stromdichte von 100, 133 oder 200 $mA/cm^2$ entsprach. Bei den durchgeführten Versuchen wurde jeweils eine Ladungsmenge von 2,5 F appliziert. Mittels der Elektrolyse wurden anodenseitig stark saure Lösungen (pH < 1) von Lithiumperoxodisulfat mit Konzentrationen im Bereich von 0,3 bis 0,53 mol/L erhalten. Die mittlere Spannung während der Elektrolyse lag zwischen 6,7 und 8,3 V. Im Verlauf der Elektrolyse wurden etwa 20% des Anolytvolumens über die Membran auf die Kathodenseite transferiert. Wie nachstehend in Schritt 3b beschrieben, ließ sich dieser Volumentransfer wieder ausgleichen.

Schritt 2: Aufschluss der Schwarzmasse mit Lithiumperoxodisulfat-Lösung:

Die in Schritt 1 erhaltene wässrige Lithiumperoxodisulfat-Lösung wurde, in Abhängigkeit von der Konzentration der Lösung und dem Ausgangsmaterial der eingesetzten Schwarzmasse, mit 40 bis 80 g der Schwarzmasse pro Liter der Lösung gemischt und bis zu 2 Tage bei 50 °C gerührt. Anschließend wurde verbleibender Feststoff abfiltriert. Im erhaltenen Filtrat befanden sich in gelöster Form neben Lithium auch die Metalle Mangan, Eisen, Cobalt, Nickel, Kupfer und Aluminium in den in Tabelle 1 angegebenen Konzentrationen. Der Wirkungsgrad der Lithiumextraktion lag bei >96%.

Tabelle 1: Konzentrationsbereiche der gelösten Metalle nach dem Aufschluss der Schwarzmasse[1]

| Cu (g/L) | Al (g/L) | Fe (g/L) | Ni (g/L) | Mn (g/L) | Co (g/L) |
|---|---|---|---|---|---|
| 2 - 7 | 1 - 2,5 | 0,3 - 12 | 0,3 - 3 | 0 - 0,2 | 0,1 - 2,5 |
| Die Variation der Metallgehalte gehen auf die unterschiedliche Zusammensetzung der verwendeten Schwarzmassen zurück. | | | | | |

Schritt 3: Abreichern von Metallen und ggf. von Phosphat:

Schritt 3a: Elektrochemische Abscheidung von Kupfer

Die als Filtrat nach dem Aufschluss in Schritt 2 gewonnene Lösung diente als Elektrolyt für die Kupfer-Abscheidung. Für die Elektrolyse wurde eine ungeteilte Elektrolytzelle verwendet, die eine Kupfer-Kathode und eine Blei-Anode aufwies. Die aktive Elektrodenfläche betrug jeweils 156 $cm^2$ und die Elektroden waren 2 cm voneinander entfernt. Die Kupferabscheidung wurde so lange unter potentiostatischen Bedingungen bei einer Zellspannung von 2,4 V betrieben, bis der Stromfluss auf einen konstanten Wert abgefallen ist. Während der elektrochemischen Kupfer-Abscheidung wuchs das Kupfer auf der Kathode in kompakter Form auf. Dabei konnte der Lösung ca. 98% des gelösten Kupfers entzogen werden.

Schritt 3b: Ausfällen von Übergangsmetallen, Aluminium sowie ggf. von Phosphat

Die Ausfällung wurde initiiert, indem der pH Wert der in Schritt 3a erhaltenen, an Kupfer abgereicherten Lösung von pH <1 auf pH >7 gemäß einem der beiden unten beschriebenen Fällungsverfahren angehoben wurde. Dabei fielen die Metalle größtenteils als die entsprechenden Hydroxidsalze, ein geringer Teil auch als die entsprechenden Sulfatsalze aus. Bei der Verwendung von Lithiumeisenphosphat-haltiger Schwarzmasse, fiel außerdem das gelöste Eisen als Phosphatsalz aus.

Da, wie unten beschreiben, bei den beiden Fällungsverfahren die stark basische Katholytlösung zum Einsatz kam, wurde durch die entsprechende Katholytentnahme der in Schritt 1 beobachtete Volumenverlust an Anolyt ausgeglichen. Außerdem wurden in den beiden Fällungsverfahren festes $LiOH \cdot H_2O$ bzw. festes $Li_2CO_3$ verwendet. Diese beiden Lithiumsalze wurden, wie in Schritt 4 beschrieben, aus dem Katholyten gewonnen.

Schritt 3b-1: Ausfällen mit LiOH:

Die in Schritt 3a erhaltene Lösung wurde mit der stark basischen Katholytlösung vermischt und der pH-Werft der Mischung durch Zugabe von festem $LiOH \cdot H_2O$ auf >7 angehoben. Bezogen auf das anfängliche Startvolumen (bezogen auf Schritt 1) wurden zwischen 0,2 und 0,3 L Katholytlösung zugegeben. Für die pH Wert Einstellung auf 7,5 wurden zwischen 72 und 75 g $LiOH \cdot H_2O$ benötigt. Für die Erhöhung des pH Wertes auf 10 wurden insgesamt 137 g $LiOH \cdot H_2O$ benötigt.

Schritt 3b-2: Ausfällen mit $Li_2CO_3$:

Der pH-Wert der in Schritt 3a erhaltenen Lösung wurde zunächst durch Zugabe von festem $Li_2CO_3$ auf pH >2 angehoben. Anschließend wurde die stark basische Katholytlösung zugegeben, so dass ein pH-Wert von mindestens pH 9 resultierte. Hierbei fallen zunächst die Elemente Cu, Fe, Al und Mn in Form ihrer Hydroxide oder Phosphate aus. Durch weitere Erhöhung des pH Wertes auf pH > 10 können weitere Elemente, nämlich Nickel und Cobalt in Form ihrer Hydroxide und/oder ggf. Phosphate (sofern in der Lösung Phosphat noch enthalten ist) ausgefällt werden.

Wie aus Tabelle 2 ersichtlich, konnten mit den beiden oben beschriebenen Fällungsverfahren die Metalle Mangan, Eisen, Cobalt, Nickel, Kupfer und Aluminium, die in der in Schritt 3a erhaltenen Lösung in gelöster Form vorlagen, jeweils nahezu quantitativ ausgefällt werden.

Tabelle 2. Wirkungsgrade der Metallfällung in Schritt 3b

| $\eta(Cu)$ [%] | $\eta(Al)$ [%] | $\eta(Fe)$ [%] | $\eta(Ni)$ [%] | $\eta(Mn)$ [%] | $\eta(Co)$ [%] |
|---|---|---|---|---|---|
| 99,6 | 99,5 | 99,6 | >99,5* | >99,5 | >99,5* |
| *) Bei Erhöhung des pH-Wertes bis >10. | | | | | |

Die in Schritt 3b erhaltene Lösung, die an Übergangsmetallen, Aluminium und ggf. Phosphat abgereichert worden war, wurde teilweise oder vollständig in die Elektroylse in Schritt 1 zurückgeführt und diente so als Ausgangslösung für die erneute elektrochemische Herstellung von Lithiumperoxodisulfat.

Schritt 4: Gewinnung von Lithium als LiOH oder $Li_2CO_3$:

Zur Abtrennung des Lithiums, das sich während der elektrochemischen Herstellung von Lithiumperoxodisulfat im Katholyten anreicherte, wurden die beiden folgenden Verfahren genutzt. Dabei wurde entweder Lithiumcarbonat oder Lithiumhydroxid erhalten.

Schritt 4a: Ausfällen von $Li_2CO_3$:

Durch Einleiten von Kohlendioxid in die stark basische Katholyt-Lösung wurde $Li_2CO_3$ ausgefällt und dann mittels Filtration isoliert. Das Filtrat ließ sich, nachdem gelöstes Kohlendioxid mit einem Inertgas, wie beispielsweise Stickstoff, ausgetrieben wurde, erneut in Schritt 1 als Katholyt für die elektrochemische Herstellung von Lithiumpero-

xodisulfat einsetzen. Das abfiltrierte $Li_2CO_3$ wies nach der Trocknung bei 110°C eine Reinheit von 99,6 mol-% (bezogen auf die Gesamtmenge an Natrium und Lithium) auf. Die geringfügigen Natriummengen stammen aus dem zur Herstellung von Katholyt und Anolyt verwendeten entionisierten Wassers.

Schritt 4b: Kristallisation von $LiOH \cdot H_2O$:

Durch Abkühlen der Katholyt-Lösung auf 8 °C konnte $LiOH \cdot H_2O$ auskristallisiert werden. Im Anschluss wurde das Kristallisat mittels Filtration isoliert. Das Filtrat ließ sich erneut in Schritt 1 als Katholyt für die elektrochemische Herstellung von Lithiumperoxodisulfat einsetzen. Das abfiltrierte Kristallisat ließ sich durch Trocknung bei 110 °C in festes $LiOH \cdot H_2O$ überführen. Durch weitere Trocknung bei 180 °C im Vakuum wurde wasserfreies LiOH erhalten.

**Patentansprüche**

1. Verfahren zur Gewinnung von Lithiumsalzen aus Schwarzmasse aus dem mechanischen Recycling von Lithiumbatterien, insbesondere von Lithiumionen-Akkumulatoren, umfassend folgenden Schritte:

   i) Bereitstellung einer schwefelsauren, wässrigen Lösung von Lithiumperoxosdisulfat durch Elektrolyse einer wässrigen Lösung von Lithiumsulfat in einer geteilten Elektrolysezelle, wobei man im Anodenraum der geteilten Elektrolysezelle eine schwefelsaure wässrige Lösung des Lithiumperoxodisulfats und Sauerstoff und im Kathodenraum der geteilten Elektrolysezelle eine wässrige Lithiumhydroxid-Lösung und Wasserstoff erhält;
   ii) Behandlung der Schwarzmasse mit der in Schritt i) bereitgestellten, schwefelsauren wässrigen Lösung von Lithiumperoxodisulfat, wobei man eine erste wässrige Lösung erhält, die das in der Schwarzmasse enthaltene Lithium in Form seiner Sulfate und/oder Phosphate sowie wenigstens einen Teil der in der Schwarzmasse enthaltenen mehrwertigen Metalle in Form ihrer Sulfate und/oder Phosphate enthält;
   iii) Abreichern der mehrwertigen Metalle und des gegebenenfalls enthaltenen Phosphats aus der ersten wässrigen Lösung unter Erhalt einer an mehrwertigen Metallen und gegebenenfalls Phosphat abgereicherten, zweiten wässrigen Lösung, die Lithium in Form eines gelösten Salzes und Sulfat enthält;
   iv) Gewinnung des Lithiums in Form eines Salzes aus der zweiten wässrigen Lösung und/oder aus der im Kathodenraum erhaltenen wässrige Lithiumhydroxid-Lösung.

2. Verfahren nach Anspruch 1, wobei der Anolyt vom Katholyt durch eine Kationentauschermebran getrennt ist.

3. Verfahren nach einem der vorhergehenden Ansprüche, wobei Anodenmaterial der Anode der geteilten Elektrolysezelle Bor-dotieren Diamant umfasst.

4. Verfahren nach einem der vorhergehenden Ansprüche, wobei die in Schritt i) eingesetzte wässrige Lösung von Lithiumsulfat einen pH-Wert im Bereich von pH 0 bis 9, insbesondere 1 bis 7, gemessen bei 25°C und 1 bar mit einer pH-Elektrode, aufweist.

5. Verfahren nach einem der vorhergehenden Ansprüche, wobei man aus dem Anodenraum Anolyt ausschleust und dem im Anodenraum verbleibenden Anolyten Lithiumsulfat zuführt.

6. Verfahren nach Anspruch 5, wobei man zumindest einen Teil der in Schritt iii) erhaltenen zweiten wässrigen Lösung in die Elektrolyse zurückführt.

7. Verfahren nach einem der vorhergehenden Ansprüche, wobei die in Schritt ii) zur Behandlung der Schwarzmasse eingesetzte schwefelsaure wässrige Lösung von Lithiumperoxodisulfat einen pH-Wert, gemessen bei 25 °C und 1 bar mit einer pH-Elektrode, unterhalb pH 5 aufweist.

8. Verfahren nach einem der vorhergehenden Ansprüche, wobei die in Schritt ii) erhaltene erste wässrige Lösung einen pH-Wert im Bereich von pH 0 bis pH 5 aufweist.

9. Verfahren nach einem der vorhergehenden Ansprüche, wobei man in Schritt ii) im Anschluss an die Behandlung der Schwarzmasse eine Abtrennung der erhaltenen ersten wässrigen Lösung von Ungelöstem durchführt.

10. Verfahren nach einem der vorhergehenden Ansprüche, wobei Schritt iii) eine elektrochemische Abscheidung wenigstens eines Teils der in der ersten wässrigen Lösung enthaltenen Übergangsmetalle umfasst.

11. Verfahren nach einem der vorhergehenden Ansprüche, wobei man in Schritt iii) zur Abreicherung des in der ersten wässrigen Lösung enthaltenen mehrwertigen Metalle den pH-Wert der ersten wässrigen Lösung durch Zugabe von Lithiumhydroxid und/oder Lithiumcarbonat auf einen pH-Wert von wenigstens pH 5 einstellt, wodurch wenigstens ein Teil der in der ersten wässrigen Lösung enthaltenen mehrwertigen Metalle ausgefällt werden.

12. Verfahren nach Anspruch 11, wobei man in Schritt iii) zunächst eine elektrochemische Abscheidung wenigstens eines Teils der in der ersten wässrigen Lösung enthaltenen Übergangsmetalle durchführt und anschließend den pH-Wert der ersten wässrigen Lösung durch Zugabe von Lithiumhydroxid und/oder Lithiumcarbonat auf einen pH-Wert von wenigstens pH 5 einstellt, wobei man insbesondere zur Einstellung des pH-Werts eine wässrige Lösung von dem aus dem Katholyten gewonnenen Lithiumhydroxid verwendet.

13. Verfahren nach einem der vorhergehenden Ansprüche, wobei man die in Schritt iii) erhaltene zweite wässrige Lösung teilweise oder vollständig in die Elektrolyse in Schritt i) zurückführt.

14. Verfahren nach einem der vorhergehenden Ansprüche, wobei man in Schritt iv) das Lithium aus dem Katholyten als Lithiumcarbonat oder Lithiumhydroxid-Hydrat abreichert.

15. Verfahren nach einem der vorhergehenden Ansprüche, wobei man während der Elektrolyse einen Teil des Katholyten aus dem Kathodenraum ausschleust und durch Wasser oder durch den an Lithium abgereicherten Katholyten ersetzt.

Europäisches
Patentamt

European
Patent Office

Office européen
des brevets

# EUROPÄISCHER RECHERCHENBERICHT

Nummer der Anmeldung

EP 24 19 2416

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 116 119 637 A (UNIV CENTRAL SOUTH) 16. Mai 2023 (2023-05-16) | 1,2,4,7, 8,13-15 | INV. C22B3/04 |
| Y | * Absätze [0005] - [0035]; Ansprüche 1-8; | 3 | C22B3/08 |
| A | Abbildungen 1-3 * | 10-12 | C22B3/44 |
| | ----- | | C22B3/00 |
| X | US 2019/207275 A1 (AMOUZEGAR KAMYAB [CA] ET AL) 4. Juli 2019 (2019-07-04) | 1,3-9, 13-15 | C22B26/12 C22B47/00 |
| Y | * Absätze [0020], [0053] - [0055]; | 1-9, | C25B1/14 |
| | Abbildungen 3,4 * | 13-15 | C25C1/06 |
| A | | 10-12 | |
| | ----- | | |
| Y | Shneker Sandra ET AL: "Electrosynthesis of persulfate and hydrogen gas with boron doped diamond as the anode material", , 23. Mai 2022 (2022-05-23), XP093237946, Gefunden im Internet: URL:https://www.diva-portal.org/smash/get/ diva2:1676731/FULLTEXT01.pdf * Seite 4 - Seite 17; Abbildung 11 * | 2,3 | |
| | ----- | | **RECHERCHIERTE SACHGEBIETE (IPC)** |
| Y | CN 116 902 998 A (CHONGQING LENGJING ENERGY TECH CO LTD) 20. Oktober 2023 (2023-10-20) * Absätze [0005] - [0017] * | 1-9, 13-15 | C22B C25C C25B |
| | ----- | | |
| A | CN 113 957 255 A (GUANGDONG BRUNP RECYCLING TECHNOLOGY CO LTD ET AL.) 21. Januar 2022 (2022-01-21) * Absätze [0008] - [0050]; Abbildung 1; Beispiele 1-3 * | 1-15 | |
| | ----- | | |
| A | US 6 514 311 B1 (LIN JIUNN-REN [TW] ET AL) 4. Februar 2003 (2003-02-04) * Spalte 5, Zeile 16 - Spalte 6, Zeile 13; Abbildungen 1,2; Beispiel 1 * | 1-15 | |
| | ----- | | |

Der vorliegende Recherchenbericht wurde für alle Patentansprüche erstellt

| Recherchenort | Abschlußdatum der Recherche | Prüfer |
|---|---|---|
| Den Haag | 14. Januar 2025 | Panitz, J |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 2416

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

14-01-2025

| Im Recherchenbericht angeführtes Patentdokument | Datum der Veröffentlichung | Mitglied(er) der Patentfamilie | Datum der Veröffentlichung |
|---|---|---|---|
| CN 116119637 A | 16-05-2023 | KEINE | |
| US 2019207275 A1 | 04-07-2019 | CA 3024198 A1 | 23-11-2017 |
| | | CN 109075407 A | 21-12-2018 |
| | | EP 3459138 A1 | 27-03-2019 |
| | | EP 4276208 A2 | 15-11-2023 |
| | | ES 2965679 T3 | 16-04-2024 |
| | | HU E065758 T2 | 28-06-2024 |
| | | JP 6991159 B2 | 12-01-2022 |
| | | JP 2019517108 A | 20-06-2019 |
| | | KR 20190009771 A | 29-01-2019 |
| | | PL 3459138 T3 | 25-03-2024 |
| | | US 2019207275 A1 | 04-07-2019 |
| | | WO 2017197528 A1 | 23-11-2017 |
| CN 116902998 A | 20-10-2023 | KEINE | |
| CN 113957255 A | 21-01-2022 | CN 113957255 A | 21-01-2022 |
| | | DE 112022000210 T5 | 31-08-2023 |
| | | ES 2971547 A1 | 05-06-2024 |
| | | GB 2621294 A | 07-02-2024 |
| | | MA 61490 A1 | 31-05-2024 |
| | | US 2023335818 A1 | 19-10-2023 |
| | | WO 2023050802 A1 | 06-04-2023 |
| US 6514311 B1 | 04-02-2003 | JP 3675392 B2 | 27-07-2005 |
| | | JP 2003157913 A | 30-05-2003 |
| | | TW 511306 B | 21-11-2002 |
| | | US 6514311 B1 | 04-02-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   WO 9707262 A

**In der Beschreibung aufgeführte Nicht-Patentliteratur**

*   **VON V. MARCINOV et al.** *Metals*, 2023, vol. 13, 1213
*   **VON H. H. HEIMES et al.** Elektromobilität. Springer, 2024, 687-704
*   Modern Electroplating. Electrochemical Society Series. Wiley & Sons Ltd, 2010